## Europäisches Patentamt
## European Patent Office
## Office européen des brevets

(19)

(11) Veröffentlichungsnummer: **0 115 289**
**A2**

(12) # EUROPÄISCHE PATENTANMELDUNG

(21) Anmeldenummer: **84100418.7**

(22) Anmeldetag: **17.01.84**

(51) Int. Cl.³: **G 01 C 1/00**

(30) Priorität: **29.01.83 DE 3303000**

(43) Veröffentlichungstag der Anmeldung:
**08.08.84 Patentblatt 84/32**

(84) Benannte Vertragsstaaten:
**AT BE CH DE FR GB IT LI LU NL SE**

(71) Anmelder: **Pöhlmann, Erich**
**Kadalöhbeinsweg 1**
**D-8650 Kulmbach(DE)**

(72) Erfinder: **Pöhlmann, Erich**
**Kadalöhleinsweg 1**
**D-8650 Kulmbach(DE)**

(72) Erfinder: **Bode, Eva, Prof. Dr.**
**Saalfelder Strasse 3**
**D-8630 Coburg(DE)**

(74) Vertreter: **Gesthuysen, Hans Dieter, Dipl.-Ing. et al,**
**Patentanwälte Gesthuysen + von Rohr Huyssenallee 15**
**Postfach 10 13 33**
**D-4300 Essen 1(DE)**

(54) **Einrichtung zum Nachführen eines Sonnenkollektors nach dem Sonnenstand.**

(57) Bei einer Einrichtung zum Nachführen eines Sonnenkollektors (1) nach dem Sonnenstand, bei der der Sonnenkollektor (1) vorzugsweise einen Reflektorspiegel (2) und ein im Brennbereich des Reflektorspiegels (2) angeordnetes Wärmeaufnahmeelement (3), insbesondere ein, vorzugsweise als Wärmerohr ausgebildetes Wärmetransportelement aufweist, der Reflektorspiegel (2) um eine Schwenkachse (4) schwenkbar angeordnet ist und zum Nachführen des Reflektorspiegels (2) ein Nachführantreib (5) vorgesehen ist kann auf eine externe Energiequelle und eine komplizierte Steuereinrichtung für den Nachführantrieb (5) verzichtet werden, indem der Nachführantrieb (5) zwei miteinander verbundene, zum Nachführen des Reflektorspiegels (2) um die Schwenkachse (4) schwenkbare Hilfskollektoren (6) aufweist und die Hilfskollektoren (6) stets selbständig in eine Stellung gleicher Energieaufnahme bringbar sind. Dabei weisen die Hilfskollektoren (6) jeweils ein Wärmeaufnahme- und -transportelement (7) auf, wobei die Wärmeaufnahme- und -transportelemente (7) beider Hilfskollektoren (6) als gegeneinander geschaltete Wärmerohre ausgebildet und zum Austausch eines Wärmeträgermediums, insbesondere eines Kältemittels, miteinander verbunden sind. Im übrigen sind die Hilfskollektoren (6) mit Hilfsreflektoren (9) zur Strahlungsverdichtung im Bereich der Wärmeaufnahme- und -transportelemente (7) versehen, die gleichzeitig als Strahlungsschirme für die Wärmeaufnahme- und -transportelemente (7) ausgebildet sind.

Die Erfindung betrifft eine Einrichtung zum Nachführen eines Sonnenkollektors nach dem Sonnenstand, wobei der Sonnenkollektor vorzugsweise einen Reflektorspiegel und ein im Brennbereich des Reflektorspiegels angeordnetes Wärmeaufnahmeelement, insbesondere ein, vorzugsweise als Wärmerohr ausgebildetes Wärmetransportelement aufweist, der Reflektorspiegel um eire Schwenkachse schwenkbar angeordnet ist und zum Nachführen des Reflektcrspiegels ein Nachführantrieb vorgesehen ist. Der Begriff "Sonnenkollektor" ist hier der besseren Verständlichkeit halber gewählt, soll jedoch keine Einschränkung bedeuten. Die in Rede stehende Einrichtung zum Nachführen kann nämlich in Verbindung mit jeglicher Art von Sonnenstrahlung empfangenden Einrichtungen verwendet werden, also Solarzellen, Fotodioden, Meßgeräten für Sonnenstrahlung, Sonnenbeobachtungseinrichtungen usw. Lediglich aus Gründen der Konkretisierung und damit der besseren Verständlichkeit ist auch ein Reflektorspiegel als zur Nachführung verstellbares Element beschrieben, obgleich natürlich auch andere Elemente des Sonnenkollektors zur Nachführung nach dem Sonnenstand verstellbar sein können. Auch kommt, wie der Stand der Technik zeigt, eine Verstellbarkeit des Sonnenkollektors insgesamt in Betracht.

Sonnenkollektoren sind seit langem und in einer Vielzahl von Ausführungsformen bekannt (vgl. Lueger "Lexikon der Technik", Band 7, "Lexikon der Energietechnik und Kraftmaschinen", DVA Stuttgart, 1965, Seiten 309 ff und 363, 364). Bei Sonnenkollektoren unterscheidet man grundsätzlich zwischen dem Typ des Sonnenofens und dem Typ des Energiesammlers. Ein Sonnenofen ist ein Sonnenkollektor, bei dem mit Hilfe konzentrierter Sonnenstrahlung sehr hohe Temperaturen erzielt werden können, während bei einem Energiesammler nur eine niedrige Verdampfungstemperatur erreicht wird, da eine Strahlungsverdichtung nicht erfolgt. Im vorliegenden Fall geht es um Sonnenkollektoren mit Strahlungsverdichtung, also um Sonnenöfen.

Die Strahlungsverdichtung bei als Sonnenöfen ausgebildeten Sonnenkollektoren erfolgt über Reflektorspiegel, insbesondere Paraboloidspiegel, da Linsen der

- 1 -

notwendigen Größe praktisch nicht herstellbar sind. Je nach der gewünschten Größe der Strahlungsverdichtung realisiert man bei diesen Sonnenkollektoren nicht Brennpunkte oder, bei Zylinderspiegeln, Brennlinien, sondern zumeist ausdehnungsmäßig unterschiedliche Brennbereiche, in denen dann ein Wärmeaufnahmeelement angeordnet ist. Ein solches Wärmeaufnahmeelement kann der direkten Wärmenutzung dienen, beispielsweise als Brennkammer ausgeführt sein, es kann aber auch als Wärmetransportelement ausgebildet sein, so daß die im Brennbereich des Reflektorspiegels erzeugte Wärme an andere Stelle transportiert wird. Als Wärmetransportelemente sind beispielsweise Verdampferrohre, insbesondere sogenannte Wärmerohre bekannt.

Die zuvor gegebene Erläuterung von als Sonnenöfen ausgebildeten Sonnenkollektoren macht deutlich, daß diese wegen der vorgesehenen Strahlungsverdichtung dem Sonnenstand nachgeführt werden müssen, da ansonsten der Brennbereich mit der Bewegung der Sonne vom Wärmeaufnahmeelement wegwandert. Zum Nachführen des Reflektorspiegels bzw. des jeweils nachzuführenden Elementes des Sonnenkollektors ist bei den bekannten Sonnenkollektoren ein im Regelfall elektromotorischer Nachführantrieb vorgesehen. Dieser Nachführantrieb wird entweder mittels einer Steuereinrichtung und eines Peilsystems direkt nach dem Sonnenstand gesteuert, es wird also auf irgendeine Weise die Sonne angepeilt und im Rahmen eines Soll/Ist-Vergleiches der Reflektorspiegel nachgeführt, oder es wird über eine computerisierte Steuereinrichtung die Sonnenbahn jedes Tages aus bekannten astronomischen Daten berechnet und der Reflektorspiegel wird dann ohne die Notwendigkeit einer Anpeilung des tatsächlichen Sonnenstandes nachgeführt.

In den beiden zuvor erläuterten Fällen ist ein eigener elektromotorischer Antrieb notwendig, zusätzlich bedarf es einer mehr oder weniger komplizierten Steuereinrichtung und außerdem muß wegen dieser beiden Voraussetzungen eine externe Energiequelle für elektrische Energie, also ein Netzanschluß, eine Batterie od. dgl., vorhanden sein. Dies Problem existiert, wie ganz eingangs

- 2 -

schon erläutert worden ist, bei allen Einrichtungen zum Nachführen irgendwelcher Empfangselemente nach dem Sonnenstand.

Die zuvor erläuterte Problematik macht es schwierig, Einrichtungen der in Rede
stehenden Art in Verbindung mit Sonnenkollektoren abseits bewohnter Gebiete,
insbesondere in den Tropen, einzusetzen, da man eben immer auf eine externe
Energiequelle angewiesen ist. Außerdem ist natürlich der Energieverbrauch als
solcher störend. Dementsprechend bemüht man sich darum, Sonnenkollektoren
mit entsprechend geschickten Spiegelsystemen so auszugestalten, daß eine Strahlungsverdichtung auch ohne Nachführen möglich ist. Eine diesbezügliche Erfindung, an der der Anmelder der vorliegenden Patentanmeldung beteiligt ist, ist
Gegenstand einer parallelen Patentanmeldung.

Vielfach wird es nicht möglich sein, nachführungsfreie Sonnenkollektoren zu
verwirklichen und/oder einzusetzen, so daß der vorliegenden Erfindung die Aufgabe zugrundeliegt, eine Einrichtung zum Nachführen eines Sonnenkollektors
nach dem Sonnenstand anzugeben, bei der auf eine externe Energiequelle und
jede komplizierte Steuereinrichtung verzichtet werden kann.

Die erfindungsgemäße Einrichtung zum Nachführen eines Sonnenkollektors nach dem
Sonnenstand, bei der die zuvor aufgezeigte Aufgabe gelöst ist, ist dadurch gekennzeichnet, daß der Nachführantrieb zwei miteinander verbundene, zum Nachführen des Reflektorspiegels um die Schwenkachse schwenkbare Hilfskollektoren
aufweist und daß die Hilfskollektoren stets selbständig in eine Stellung
gleicher Energieaufnahme bringbar sind. Erfindungsgemäß wird mit den beiden
erfindungsgemäß vorgesehenen Hilfskollektoren gewissermaßen eine Zweipunktpeilung des Sonnenstandes verwirklicht, wobei gleichzeitig diese Hilfskollektoren auch den Antrieb für den Reflektorspiegel bilden. Wie eingangs schon angesprochen worden ist, ist es dabei natürlich nicht zwingend, daß das nachzuführende Element der Reflektorspiegel ist. Auch das Wärmeaufnahmeelement, ein
ggf. vorgesehener Hilfspiegel, ggf. ein Träger für entsprechende Meßelemente

- 3 -

usw. kann bzw. können durch die erfindungsgemäß vorgesehenen und angeordneten Hilfskollektoren bewegt werden. (Insoweit ist die Erfindung auch im Rahmen der zuvor schon angesprochenen parallelen Patentanmeldung für das dortige Wärmeaufnahmeelement grundsätzlich anwendbar.) Im übrigen ist auch anstelle der Schwenkbewegung natürlich eine Translationsbewegung möglich, wobei letztlich für die in der Praxis vorgesehene Bewegung optische und reibungstechnische Gesichtspunkte eine Rolle spielen werden. Wesentlich für die Erfindung ist letztlich nur, daß bei ungleicher Energieaufnahme der beiden Hilfskollektoren, also im Ergebnis unterschiedlicher Sonneneinstrahlung bei den beiden Hilfskollektoren eine Stellkraft erzeugt wird, die die Hilfskollektoren und damit gemeinsam den Reflektorspiegel in Gleichgewichtsstellung zu bringen sucht.

Insgesamt kann mit der erfindungsgemäßen Einrichtung gewissermaßen durch die Sonne selbst eine automatische Nachführung nach dem Sonnenstand erfolgen, ohne daß irgendwelche besonderen Steuereinrichtungen vorgesehen sein müßten und insbesondere ohne daß ein zusätzlicher elektrischer Antrieb notwendig wäre.

Es gibt nun verschiedene Möglichkeiten, die erfindungsgemäße Einrichtung auszugestalten und weiterzubilden, was im folgenden nur beispielhaft erläutert werden soll.

In einer ersten Ausführungsform, der besondere Bedeutung zukommt, ist die erfindungsgemäße Einrichtung dadurch gekennzeichnet, daß die Hilfskollektoren jeweils ein Wärmeaufnahme- und -transportelement aufweisen und daß die Wärmeaufnahme- und -transportelemente beider Hilfskollektoren zum Austausch eines Wärmeträgermediums, insbesondere eines Kältemittels, miteinander verbunden sind. Vorzugsweise sind dabei die Wärmeaufnahme- und -transportelemente als gegegeneinander geschaltete Wärmerohre ausgebildet. Das anzustrebende Gleichgewicht der beiden Hilfskollektoren wird hier durch das verdampfende Wärmeträgermedium in Form eines Kältemittels erzielt. Das Kältemittel verdampft im wärmeren

- 4 -

Hilfskollektor und kondensiert im kälteren Hilfskollektor, so daß sich eine
Gewichtsverlagerung vom wärmeren zum kälteren Hilfskollektor hin ergibt. Dadurch wird die zuvor erläuterte mechanische Stellkraft erzeugt, wobei diese
Stellkraft so lange aufrecht erhalten bleibt, bis ein Gleichgewichtszustand
erreicht ist.

In weiterer Ausgestaltung der zuletzt erläuterten Ausführungsform der Erfindung
empfiehlt es sich,die Hilfskollektoren mit Hilfsreflektoren zur Strahlungsverdichtung im Bereich der Wärmeaufnahme- und -transportelemente zu versehen.
Insoweit ist bei sehr hohen Anforderungen an die Strahlungsverdichtung eine
Konstruktion besonders zu empfehlen, die in der zuvor schon an zwei Stellen
erwähnten parallelen Patentanmeldung beschrieben ist. Unter normalen Anforderungsbedingungen jedoch reicht die Ausgestaltung der Hilfsreflektoren als
paddelartige, leicht gebogene Spiegel aus. In jedem Fall empfiehlt es sich
dabei, die Hilfsreflektoren gleichzeitig als Strahlungsschirme auszubilden.
Auf diese Weise wird eine definierte Sonneneinstrahlung auf die Hilfskollektoren bzw. deren Wärmeaufnahme- und -transportelemente realisierbar, so daß
eine relativ "empfindliche" Nachführung des Reflektorspiegels möglich ist.
Dabei sollten die Strahlungsschirme, eine Schwenkbewegung der Hilfsreflektoren vorausgesetzt, so angeordnet sein, daß eine radial von außen kommende
Sonnenstrahlung abgeschirmt wird.

Eine zweite, auf einem völlig anderen Funktionsprinzip beruhende, gleichfalls
aber höchst zweckmäßige Ausführungsform der erfindungsgemäßen Einrichtung ist
dadurch gekennzeichnet, daß die Hilfskollektoren als Wärmeaufnahmeplatten,vorzugsweise mit geschwärzten Oberflächen, ausgebildet und vorzugsweise $\wedge$-förmig
angeordnet sind. Hier wird das Prinzip der sogenannten "Lichtmühlen" im Rahmen
eines Nachführantriebes der in Rede stehenden Art eingesetzt. Bei Nicht-Gleichgewicht, also ungleichmäßiger Sonneneinstrahlung auf die Hilfskollektoren,
wird eine flache Luftschicht unmittelbar vor der wärmeren Wärmeaufnahmeplatte

- 5 -

stärker erwärmt als eine entsprechende Luftschicht unmittelbar vor der kühleren Wärmeaufnahmeplatte. Die temperaturbedingt stärkere Molukarbewegung in der wärmeren Luftschicht führt dazu, daß die wärmere Wärmeaufnahmeplatte von der der Sonnenstrahlung ausgesetzten Seite weg gerichtet bewegt wird. Bei gleicher Sonneneinstrahlung auf beide Wärmeaufnahmeplatten, also bei Gleichgewicht der Hilfskollektoren, befindet sich dieser Nachführantrieb im Gleichgewicht und der entsprechende Reflektorspiegel ist genau auf die Sonne ausgerichtet.

Eine dritte Ausführungsform der erfindungsgemäßen Einrichtung, die wiederum auf einem gänzlich anderen grundsätzlichen Funktionsprinzip beruht, ist dadurch gekennzeichnet, daß die Hilfskollektoren als vorzugsweise plattenartige Getterelemente (Adsorptionselemente) ausgebildet und vorzugsweise $\wedge$-förmig angeordnet sind. Unter Getterung bzw. Adsorption versteht man die Aufnahme von Gasen oder Dämpfen aus einem Volumen in eine Feststoffschicht. Dabei geht es hier tatsächlich um Adsorptionsvorgänge die reversibel sind, d. h. durch Erhöhung der Temperatur des adsorbierenden Materials wieder rückgängig gemacht werden können. Derartige Verfahren und Elemente sind grundsätzlich seit langem bekannt (vgl. z. B. das "Lexikon der Physik", Band 3, "Getterung", DTV München, 1970). Weit verbreitet sind Getterung und insbesondere Adsorption im Bereich der Vakuumtechnik (vgl. Leybold-Heraeus, Gesamtkatalog HV 150, 1973, Teil 15, Abschnitt 2.16 "Sorptionspumpen"). Unter Hinweis auf die zuvor erwähnten Literaturstellen kann hier auf nähere Erläuterungen zum Prinzip der Getterung und den verwendeten Werkstoffen verzichtet werden. Wesentlich ist im Rahmen der erfindungsgemäßen Einrichtung lediglich, daß die Reversibilität der Getterung bzw. Adsorption durch Wärmezufuhr ausgenutzt wird, um den "Rückstoßeffekt" bei der Freigabe adsorbierten Gases auszunutzen. Im Rahmen der Erfindung wird also der bei der Wiederfreisetzung von zuvor adsorbierten Gasmolekülen durch Erwärmung mittels Sonnenstrahlung erzeugte Rückstoß dazu genutzt, die Nachführung des Reflektorspiegels zu bewirken.

Insbesondere in den beiden zuletzt erläuterten Fällen, jedoch im Prinzip ganz grundsätzlich ist es empfehlenswert, die erfindungsgmäße Einrichtung so auszugestalten, daß der Nachführantrieb und ggf. auch der Reflektorspiegel insgesamt in einer Schutzhülle, vorzugsweise einem ggf. teilevakuierten Glasrohr, angeordnet sind. Die geringen zur Verfügung stehenden Stellkräfte machen nämlich einen Schutz insbesondere des Nachführantriebes gegen externe Störeinflüsse fast zwingend notwendig. Dieser Schutz kann auch durch das als Wärmeaufnahmeelement zu verwendende Wärmerohr selbst verwirklicht sein, wenn der Nachführantrieb in diesem Wärmerohr od. dgl. an einem Ende angeordnet ist. Eine solche fast voll gekapselte Ausgestaltung der erfindungsgemäßen Einrichtung ist natürlich besonders unempfindlich und völlig wartungsfrei.

Aus mechanisch-konstruktiven Überlegungen heraus empfiehlt sich eine Ausführungsform der erfindungsgemäßen Einrichtung, die dadurch gekennzeichnet ist, daß die Schwenkachse oberhalb der Schwerelinie des Nachführantriebes angeordnet ist.

Schließlich kann es empfehlenswert sein, für beide Richtungen der Nachführbewegung Anschläge vorzusehen, durch die der Schwenkwinkel der Hilfskollektoren und des Reflektorspiegels auf $\pm 67^{\circ}$ bzw. $\pm 90^{\circ}$ gegenüber der Vertikalen begrenzbar ist. Die genaue Winkelbegrenzung hängt auch von der Neigung der Längsachse der gesamten Einrichtung ab, die ihrerseits natürlich wiederum vom Breitengrad des Einsatzortes, also der maximalen Sonnenhöhe abhängt.

Im folgenden wird nun die Erfindung anhand einer lediglich Ausführungsbeispiele darstellenden Zeichnung näher erläutert; es zeigt

Fig. 1    in einer schematischen, lediglich das Funktionsprinzip erläuternden Darstellung ein erstes Ausführungsbeispiel der erfindungsgemäßen Einrichtung,

Fig. 2    den Nachführantrieb für die Einrichtung gemäß Fig. 1 in Draufsicht,

Fig. 3    den Nachführantrieb für die Einrichtung gemäß Fig. 1 in schematischer Darstellung in Stirnansicht,

- 7 -

Fig. 4    schematisch und im Schnitt, in einer lediglich das Funktionsprinzip
          erläuternden Darstellung, ein zweites Ausführungsbeispiel der erfindungsgemäßen Einrichtung und

Fig. 5    ein drittes Ausführungsbeispiel der erfindungsgemäßen Einrichtung in
          einer Fig. 4 entsprechenden Darstellung.

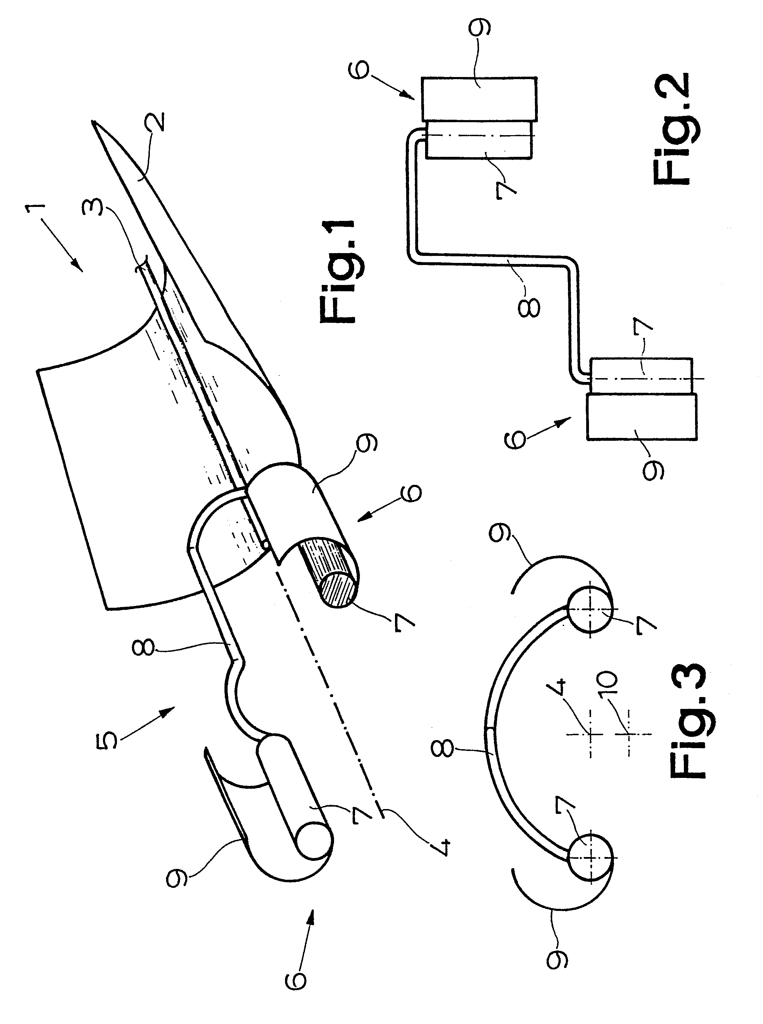

Die in Fig. 1 in einem ersten Ausführungsbeispiel dargestellte Einrichtung dient
zum Nachführen eines Sonnenkollektors 1 nach dem Sonnenstand. Der Sonnenkollektor
weist dabei im hier dargestellten Ausführungsbeispiel einen Reflektorspiegel 2
und ein im Brennbereich des Reflektorspiegels 2 angeordnetes Wärmeaufnahmeelement 3 in Form eines Wärmerohres auf. Der Reflektorspiegel 2 ist paraboloidförmig als Zylinderspiegel ausgeführt, in dessen Brennlinie mehr oder weniger
genau das Wärmeaufnahmeelement 3 angeordnet ist. Der Reflektorspiegel 2 ist um
eine Schwenkachse 4 schwenkbar angeordnet und durch diese Schwenkung dem Sonnenstand nachführbar.

Zum Nachführen des Reflektorspiegels 2 nach dem Sonnenstand ist ein Nachführantrieb 5 vorgesehen, der erfindungsgemäß zwei miteinander verbundene, zum
Nachführen des Reflektorspiegels 2 um die Schwenkachse 4 schwenkbare Hilfskollektoren 6 aufweist, wobei die Hilfskollektoren 6 selbsttätig in eine Stellung gleicher Energieaufnahme, also übereinstimmender Sonneneinstrahlung, bringbar sind.

Im einzelnen weisen bei dem in Fig. 1 dargestellten Nachführantrieb 5 die Hilfskollektoren 6 jeweils ein Wärmeaufnahme- und -transportelement 7 auf, wobei die
Wärmeaufnahme- und -transportelemente 7 beider Hilfskollektoren 6 zum Austausch
eines Wärmeträgermediums in Form eines Kältemittels miteinander verbunden sind.
Die Wärmeaufnahme- und -transportelemente 7 sind hier als gegeneinander geschaltete Wärmerohre ausgebildet und über ein Dampfüberleitrohr 8 verbunden.

- 8 -

Im übrigen ist noch erkennbar, daß die Hilfskollektoren 6 mit Hilfsreflektoren 9 zur Strahlungsverdichtung im Bereich der Wärmeaufnahme- und -transportelemente 7 versehen sind, die gleichzeitig als Strahlungsschirme ausgebildet sind und die radial von außen einstrahlende Sonnenstrahlung abzuschirmen
vermögen.

In Fig. 3 ist deutlich erkennbar, daß die Schwenkachse 4 oberhalb der Schwerelinie 10 des Nachführantriebes 5 angeordnet ist, so daß auch ohne äußere Einwirkungen ein stabiles Gleichgewicht vorliegt.

In den Fig. 1 bis 3 ist im übrigen nicht erkennbar, daß der Nachführantrieb
und der Reflektorspiegel gemeinsam insgesamt in einer Schutzhülle in Form eines
Glasrohres angeordnet sind und daß für beide Richtungen der Nachführbewegung
Anschläge vorgesehen sind.

Die Funktionsweise der in den Fig. 1 bis 3 dargestellten Einrichtung, insbesondere des gezeigten Nachführantriebes 5, ist nun folgende:

Strahlt in Fig. 3 Sonne von rechts oben auf den Nachführantrieb 5, so ist das
in der Figur rechts angeordnete Wärmeaufnahme- und -transportelement 7 von
dem Hilfsreflektor 9 abgeschirmt, so daß dort eine Erwärmung nicht erfolgt.
Die Sonneneinstrahlung trifft aber voll auf das Wärmeaufnahme- und -transportelement 7, das in Fig. 3 links angeordnet ist, und zwar noch verstärkt von
der verspiegelten Innenfläche des Hilfsreflektors 9. Das hier vorhandene flüssige Kältemittel verdampft und schlägt sich im kälteren, gegenüberliegenden
Wärmeaufnahme- und -transportelement 7 wieder als Flüssigkeit nieder. Es wird
also gewissermaßen das Wärmeträgermedium in Form des Kältemittels von links
nach rechts verlagert. Dadurch wird der rechte Hilfskollektor 6 "schwerer"
und eine Schwenkbewegung im Uhrzeigersinn erfolgt, also eine Schwenkbewegung
in Richtung auf den Sonnenstand zu. Diese Schwenkbewegung hört auf, sobald
die beiden Wärmeaufnahme- und -transportelemente 7 gleichmäßig bestrahlt wer-

- 9 -

den. Dann ist die gesamte Einrichtung auf die Sonne exakt ausgerichtet.

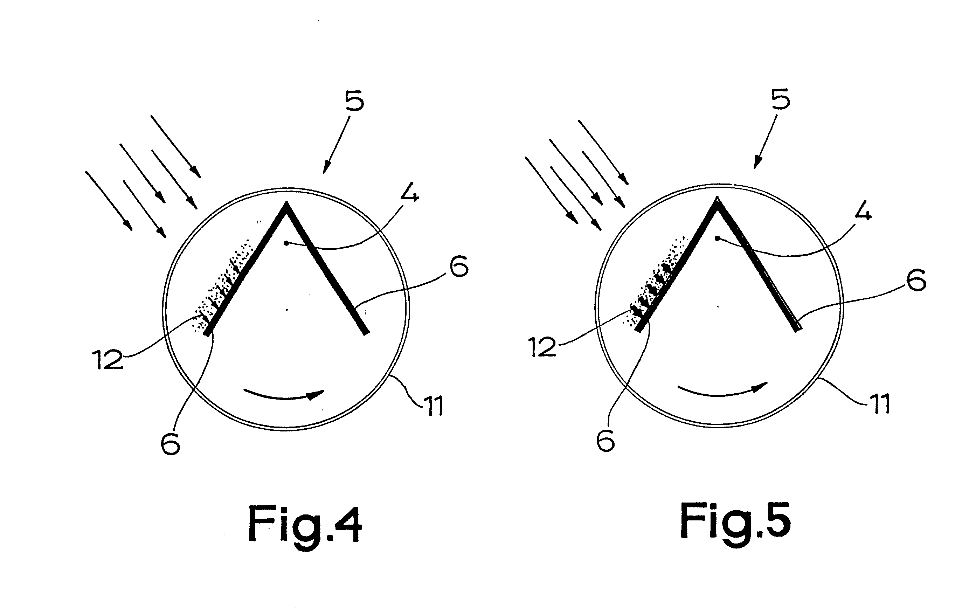

Das in Fig. 4 dargestellte Ausführungsbeispiel einer erfindungsgemäßen Einrichtung arbeitet mit als Wärmeaufnahmeplatten ausgebildeten Hilfskollektoren. Hier ist der Nachführantrieb 5 insgesamt in einer Schutzhülle 11 aus Glas angeordnet. Angedeutet ist, daß auf der Seite der Sonneneinstrahlung die Wärmebewegung des in der Schutzhülle 11 aus Glas vorhandenen Gases, beispielsweise Luft, besonders groß ist, so daß eine durch Pfeile 12 angedeutete Stellkraft auf den linken Hilfskollektor 6 entgegen dem Uhrzeigersinn ausgeübt wird.

Schließlich zeigt Fig. 5 ein Ausführungsbeispiel der erfindungsgemäßen Einrichtung, bei dem die Hilfskollektoren 6 als plattenartige Getterelemente (Adsorptionselemente) ausgebildet und $\wedge$-förmig angeordnet sind. Die Pfeile 12 geben hier die Richtung der Rückstoßkraft   bei Erwärmung des Hilfskollektors 6 freigesetzter Gasmoleküle an.

Patentansprüche:

1. Einrichtung zum Nachführen eines Sonnenkollektors nach dem Sonnenstand, wobei der Sonnenkollektor vorzugsweise einen Reflektorspiegel und ein im Brennbereich des Reflektorspiegels angeordnetes Wärmeaufnahmeelement, insbesondere ein, vorzugsweise als Wärmerohr ausgebildetes Wärmetransportelement aufweist, der Reflektorspiegel um eine Schwenkachse schwenkbar angeordnet ist und zum Nachführen des Reflektorspiegels ein Nachführantrieb vorgesehen ist, d a - d u r c h  g e k e n n z e i c h n e t, daß der Nachführantrieb (5) zwei miteinander verbundene, zum Nachführen des Reflektorspiegels (2) um die Schwenkachse (4) schwenkbare Hilfskollektoren (6) aufweist und daß die Hilfskollektoren (6) stets selbständig in eine Stellung gleicher Energieaufnahme bringbar sind.

2. Einrichtung nach Anspruch 1, dadurch gekennzeichnet, daß die Hilfskollektoren (6) jeweils ein Wärmeaufnahme- und -transportelement (7) aufweisen und daß die Wärmeaufnahme- und -transportelemente (7) beider Hilfskollektoren (6) zum Austausch eines Wärmeträgermediums, insbesondere eines Kältemittels, miteinander verbunden sind.

3. Einrichtung nach Anspruch 2, dadurch gekennzeichnet, daß die Wärmeaufnahme- und -transportelemente (7) als gegeneinander geschaltete Wärmerohre ausgebildet sind.

4. Einrichtung nach Anspruch 2 oder 3, dadurch gekennzeichnet, daß die Hilfskollektoren (6) mitHilfsreflektoren (9) zur Strahlungsverdichtung im Bereich der Wärmeaufnahme- und -transportelemente (7) versehen sind.

5. Einrichtung nach Anspruch 4, dadurch gekennzeichnet, daß die Hilfsreflektoren (9) gleichzeitig als Strahlungsschirme für die Wärmeaufnahme- und -transportelemente (7) ausgebildet sind.

- 1 -

6. Einrichtung nach Anspruch 1, dadurch gekennzeichnet, daß die Hilfskollektoren (6) als Wärmeaufnahmeplatten, vorzugsweise mit geschwärzten Oberflächen, ausgebildet und vorzugsweise ∧-förmig angeordnet sind.

7. Einrichtung nach Anspruch 1, dadurch gekennzeichnet, daß die Hilfskollektoren (6) als vorzugsweise plattenartige Getterelemente (Adsorptionselemente) ausgebildet und vorzugsweise ∧-förmig angeordnet sind.

8. Einrichtung nach einem der Ansprüche 1 bis 7, dadurch gekennzeichnet, daß der Nachführantrieb (5) und ggf. auch der Reflektorspiegel insgesamt in einer Schutzhülle (11), vorzugsweise einem ggf. teilevakuierten Glasrohr, angeordnet sind.

9. Einrichtung nach einem der Ansprüche 1 bis 8, dadurch gekennzeichnet, daß die Schwenkachse (4) oberhalb der Schwerelinie (10) des Nachführantriebes (5) angeordnet ist.

10. Einrichtung nach einem der Ansprüche 1 bis 9, dadurch gekennzeichnet, daß für beide Richtungen der Nachführbewegung Anschläge vorgesehen sind.

- 2 -

**Fig.1**

**Fig.3**

**Fig.2**

1/2

0115289

Fig.4

Fig.5